(19) Europäisches Patentamt
European Patent Office
Office européen des brevets

(11) EP 2 878 625 A1

(12) # EUROPÄISCHE PATENTANMELDUNG

(43) Veröffentlichungstag:
**03.06.2015 Patentblatt 2015/23**

(51) Int Cl.:
***C08L 67/02*** *(2006.01)* ***C08K 3/22*** *(2006.01)*
*C08K 9/06* *(2006.01)*

(21) Anmeldenummer: **13194637.8**

(22) Anmeldetag: **27.11.2013**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(71) Anmelder: **LANXESS Deutschland GmbH**
**50569 Köln (DE)**

(72) Erfinder:
- **Immel, Timo**
  **41539 Dormagen (DE)**
- **Endtner, Jochen**
  **50679 Köln (DE)**
- **Bienmüller, Matthias**
  **47803 Krefeld (DE)**

(54) **Polyester Zusammensetzungen**

(57) Die Erfindung betrifft Zusammensetzungen enthaltend Polyethylenterephthalat (PET), Poly (1,4-cyclohexandimethanolterephthalat (PCT) und Titandioxid, die Verwendung dieser Zusammensetzungen zur Herstellung kurzzeitwärmeformbeständiger Erzeugnisse sowie ein Verfahren zur Herstellung kurzzeitwärmeformbeständiger Polyester-basierter Erzeugnisse insbesondere Polyester-basierter optoelektronischer Erzeugnisse.

EP 2 878 625 A1

## Beschreibung

Die Erfindung betrifft Zusammensetzungen enthaltend Polyethylenterephthalat (PET), Poly(1,4-cyclohexandimethanolterephthalat) (PCT) und Titandioxid, die Verwendung dieser Zusammensetzungen zur Herstellung kurzzeitwärmeformbeständiger Erzeugnisse sowie ein Verfahren zur Herstellung kurzzeitwärmeformbeständiger Polyester-basierter Erzeugnisse, insbesondere Polyester-basierter optoelektronischer Erzeugnisse.

Viele elektronische und elektrische Baugruppen und Komponenten umfassen temperaturempfindliche elektrische und/oder elektronische Erzeugnisse, wie z.B. wärmeempfindliche integrierte Schaltkreise, Lithiumbatterien, Oszillatorkristalle, optoelektronische Erzeugnisse. Im Zuge der Montage einer solchen Baugruppe müssen die an den Erzeugnissen vorgesehenen elektrischen Kontakte prozesssicher mit Leiterbahnen einer Platine und/oder mit elektrischen Kontakten anderer Erzeugnisse verbunden werden. Diese Montage erfolgt häufig mit Hilfe eines Lötverfahrens, bei dem am Erzeugnis vorgesehene Lötanschlüsse mit der Platine verlötet werden. Für jedes Erzeugnis ergibt sich dabei ein sicherer Bereich für die Lötzeit und Löttemperatur, in der gute Lötverbindungen hergestellt werden können.

Hieraus ergeben sich an die einzusetzenden Materialien hohe Anforderungen hinsichtlich der Kurzzeitwärmeformbeständigkeit. Des Weiteren müssen derartige Materialien eine hohe Reflexion und eine sehr gute Alterungsbeständigkeit unter den bei der späteren Anwendung, z.B. in Licht emittierenden Dioden (LED), auftretenden Temperaturen haben.

Aus WO 2010/049531 A1 sind sogenannte Power-LEDs auf Basis aromatischer Polyester oder vollständig aromatischer Polyester bekannt, wodurch der Abbau des thermoplastischen Materials durch Hitze oder Strahlung verhindert werden soll. Der Einsatz dieser aromatischen Polyester oder vollständig aromatischen Polyester, insbesondere auf Basis von p-Hydroxybenzoesäure, Terephthalsäure, Hydrochinon oder 4,4'-Bisphenol und gegebenenfalls Isophthalsäure führt zu einer länger anhaltenden Leuchtkraft jener Power-LEDs. Nachteilig an den aromatischen Polyestern der WO 2010/049531 A1 ist jedoch die hohe Verarbeitungstemperatur in der Schmelze, die aufgrund der hohen Schmelzpunkte der beschriebenen Polymere bei Temperaturen von 355°C und höher liegen, ebenso wie die hohen Werkzeugtemperaturen von 175°C und höher. Hohe Verarbeitungs- und Werkzeugtemperaturen erfordern spezielle und kostenaufwändig ausgerüstete Spritzgussmaschinen, insbesondere bei Temperierung und Kühlung der Werkzeuge. Zudem führen hohe Verarbeitungstemperaturen zu erhöhtem Verschleiß der Spritzgusseinheit in den für die Verarbeitung derartiger, aromatische Polyester enthaltender, Formmassen vorgesehenen Spritzgussmaschinen.

JP-A-55027335 und WO2012/080361A1 offenbaren Zusammensetzungen enthaltend als Polyester PET, Titandioxid und Glasfasern zwecks Einsatz im Bereich optoelektronischer Erzeugnisse. Derartige, auf PET basierende Zusammensetzungen und daraus hergestellte Erzeugnisse sind aufgrund des niedrigen Schmelzpunktes von PET und der daraus resultierenden limitierten Kurzzeitwärmeformbeständigkeit nur bedingt bei den hohen Temperaturen des Wellenlötens einsetzbar.

Um ein gutes Lötergebnis zu erreichen, müssen Erzeugnisse, die zur Herstellung von Licht emittierenden Dioden (LEDs) eingesetzt werden, während des Lötens über längere Zeiten hinweg erhöhten Temperaturen ausgesetzt werden. So wird z.B. beim Wellenlöten das auf die Platine gesteckte Erzeugnis zunächst langsam auf etwa 100 °C aufgewärmt. Danach erfolgt die eigentliche Lötung, die typischerweise bei Verwendung bleifreier Lote im Bereich von etwa 260° C - 285° C erfolgt und mindestens 5 Sekunden dauert, gefolgt von der Erstarrungsphase, während das Erzeugnis langsam abkühlt. Gemäß "http://de.wikipedia.org/wiki/Wellenl%C3%B6ten" ist das Wellenlöten, auch als Schwalllöten bezeichnet, ein Lötverfahren, mit dem elektronische Baugruppen (Leiterplatten, Flachbaugruppen) halb- oder vollautomatisch nach dem Bestücken gelötet werden. Die Lötseite der Leiterplatte wird zunächst im Fluxer mit einem Flussmittel benetzt. Danach wird die Leiterplatte mittels Konvektionsheizung (Verwirbelung der Wärme, wodurch praktisch überall, auch auf der Oberseite, die gleiche Temperatur anliegt), Wendelheizung oder Infrarot-Strahlern vorgeheizt. Dies geschieht zum einen, um den Lösungsmittelanteil des Flussmittels zu verdampfen (sonst Blasenbildung beim Lötvorgang), die chemische Wirkung der Aktivatoren zu erhöhen und um einen Temperaturverzug der Baugruppe sowie Schädigung der Bauteile durch einen zu steilen Temperaturanstieg beim nachfolgenden Löten zu vermeiden. In der Regel wird eine Temperaturdifferenz von unter 120 °C gefordert. Das bedeutet, dass bei einer Löttemperatur von 250 °C die Platine auf mindestens 130 °C aufgewärmt werden muss.

Genaue Daten ergeben sich durch Temperaturprofile. Dabei werden an einer Musterplatine Temperaturfühler an relevanten Punkten angebracht und mit einem Messgerät aufgezeichnet. So erhält man Temperaturkurven für die Platinenober- und unterseite für ausgewählte Bauteile. Im Anschluss daran wird die Baugruppe über eine oder zwei Lötwellen gefahren. Die Lotwelle wird durch Pumpen von flüssigem Lot durch eine Öffnung erzeugt. Die Löttemperatur liegt bei bleihaltigen Loten bei ca. 250 °C, bei den wegen der Verhinderung bleihaltiger Dämpfe bevorzugt einzusetzenden bleifreien Loten ca. 10 °C bis 35°C höher, also bei 260 °C bis 285°C.

Die Lötzeit ist so zu wählen, dass die Erwärmung weder die Leiterplatte noch die wärmeempfindlichen Bauelemente schädigt. Die Lötzeit ist die Berührzeit des flüssigen Lotes pro Lötstelle. Die Richtzeiten betragen für einseitig kaschierte Leiterplatten weniger als eine Sekunde und bei zweiseitig kaschierten Leiterplatten nicht mehr als zwei Sekunden. Bei Mehrleiterplatten gelten individuelle Lötzeiten bis hin zu sechs Sekunden. Nach DIN EN 61760-1 aus

1998 ist die maximale Zeit für eine oder auch zwei Wellen zusammen 10 Sekunden. Genauere Details sind der oben genannten Literaturstelle zu entnehmen. Nach dem Löten ist eine Kühlung der Baugruppe sinnvoll, um die thermische Belastung schnell wieder zu verringern. Dies geschieht über eine direkte Kühlung durch ein Kühlaggregat (Klimaanlage) unmittelbar nach dem Lötbereich und/oder durch konventionelle Lüfter in der Senkstation oder einem Kühltunnel im Rücklaufband.

WO 2007/033129 A2 beschreibt temperaturbeständige Zusammensetzungen für LED-Fassungen auf Basis von PCT, sowie Titandioxid und Glasfasern, die gegebenenfalls auch andere thermoplastische Polyester, so auch PET in einer Menge von bis zu 70 Gew. %" basierend auf das Gesamtgewicht des PCT" enthalten können. Nachteilig an den Zusammensetzungen gemäß WO 2007/033129 A2 sind die schlechteren mechanischen Eigenschaften im Vergleich mit reinem PET sowie deren schwierigere Verarbeitbarkeit bedingt durch die langsamere Kristallisation des PCT.

Die Aufgabe der vorliegenden Erfindung bestand deshalb darin, Zusammensetzungen auf Basis von PCT mit den günstigen Eigenschaften des PET so zu kombinieren, dass diese schließlich optimierte Eigenschaften in Bezug auf Kurzzeitwärmeformbeständigkeit, Reflektion nach thermischer Beanspruchung, bessere mechanische Eigenschaften und gleichzeitig niedrige Verarbeitungstemperaturen in der Schmelze aufweisen.

Lösung der Aufgabe und Gegenstand der vorliegenden Erfindung sind Zusammensetzungen enthaltend

a) 3 bis 30 Gew.-%, bevorzugt 5 bis 25 Gew.-%, besonders bevorzugt 10 bis 20 Gew.-% Poly(1,4-cyclohexylendimethylen)terephthalat (PCT), wobei der Anteil an PCT bezogen auf die Summe aller enthaltener thermoplastischen Polymere in der Zusammensetzung im Bereich von 5 bis 40 Gew-%, bevorzugt 7 bis 30 Gew.-%, besonders bevorzugt bei 10-25% Gew.-% liegt,

b) 15 bis 90 Gew.-%, bevorzugt 20 bis 70 Gew.-%, besonders bevorzugt 30 bis 60 Gew.-% Polyethylenterephthalat (PET) und

c) 5 bis 70 Gew.-%, bevorzugt 10 bis 40 Gew.-%, besonders bevorzugt 15 bis 35 Gew.-% Titandioxid, wobei die Summe aller Gewichtsprozente stets 100 ergibt.

Zur Klarstellung sei angemerkt, dass vom Rahmen der vorliegenden Erfindung alle nachfolgend aufgeführten allgemeinen oder in Vorzugsbereichen genannten Definitionen und Parameter in beliebigen Kombinationen umfasst sind.

Gute mechanische Eigenschaften im Sinne der vorliegenden Erfindung zeichnen sich im Falle herzustellender Erzeugnisse durch hohe Werte bei der Izod Schlagzähigkeit unter Beibehaltung hoher Werte beim Biegemodul aus. Die Schlagzähigkeit beschreibt die Fähigkeit eines Werkstoffes, Stoßenergie und Schlagenergie zu absorbieren ohne zu brechen. Die Prüfung der Izod Schlagzähigkeit nach ISO 180 ist eine Standard-Methode zur Bestimmung der Schlagzähigkeit von Materialien. Hierbei wird ein Arm zunächst in einer bestimmten Höhe gehalten (= konstante potentielle Energie) und schließlich freigegeben. Der Arm trifft auf die Probe wobei diese bricht. Von der Energie, die durch die Probe absorbiert wird, wird die Aufprallenergie bestimmt. Die Schlagzähigkeit wird berechnet als das Verhältnis aus Schlagarbeit und Probekörperquerschnitt (Maßeinheit kJ/m$^2$). Die Schlagzähgikeit wurde im Rahmen der vorliegenden Erfindung gemäß ISO 180-1 U bei 23°C bestimmt. Gemäß "http://de.wikipedia.org/wiki/Biegeversuch" wird das Biegemodul im 3-Punkt-Biegeversuch ermittelt, wobei eine Prüfprobe auf zwei Auflagen positioniert und in der Mitte mit einem Prüfstempel belastet wird. Dies ist wahrscheinlich die am häufigsten verwendete Form des Biegeversuches. Das Biegemodul berechnet sich bei einer Flachprobe dann wie folgt:

$$E = \frac{l_{\mathrm{v}}^3 (X_{\mathrm{H}} - X_{\mathrm{L}})}{4 D_{\mathrm{L}} b a^3}$$

wobei $E$ = Biegemodul in kN/mm$^2$; $l_v$, = Stützweite in mm; $X_H$ = Ende der Biegemodulermittlung in kN; $X_L$ = Beginn der Biegemodulermittlung in kN; $D_L$ = Durchbiegung in mm zwischen $X_H$ und $X_L$; $b$ = Probenbreite in mm; $a$ = Probendicke in mm. Das Biegemodul wurde im Rahmen der vorliegenden Erfindung gemäß ISO178-A bei 23°C bestimmt.

In einer bevorzugten Ausführungsform betrifft die vorliegende Erfindung Zusammensetzungen enthaltend zusätzlich zu den Komponenten a), b) und c) noch

d) 5 bis 50 Gew.-%, bevorzugt 10 bis 40 Gew.-%, besonders bevorzugt 13 bis 33 Gew.-% Glasfasern, wobei die Komponenten a, b, c) soweit reduziert werden, dass die Summe aller Gewichtsprozente stets 100 ergibt.

In einer bevorzugten Ausführungsform enthalten die erfindungsgemäßen Zusammensetzungen zusätzlich zu a) bis d) oder anstelle von d) noch

e) 0,01 bis 15 Gew.-%, bevorzugt 0,01 bis 10 Gew.-%, besonders bevorzugt 0,01 bis 5 Gew.-% Talkum, bevorzugt mikrokristellines Talkum, wobei die übrigen Komponenten soweit reduziert werden, dass die Summe aller Gewichtsprozent stets 100 ergibt.

In einer bevorzugten Ausführungsform enthalten die erfindungsgemäßen Zusammensetzungen zusätzlich zu a) bis e) oder anstelle der Komponenten d) und/oder e) noch

f) 0,01 bis 1 Gew.%, bevorzugt 0,1 bis 1 Gew.-%, besonders bevorzugt 0,5 bis 1 Gew.-% wenigstens eines Phosphitstabilisators, wobei die übrigen Komponenten soweit reduziert werden, dass die Summe aller Gewichtsprozente stets 100 ergibt.

In einer bevorzugten Ausführungsform enthalten die erfindungsgemäßen Zusammensetzungen zusätzlich zu a) bis f) oder anstelle der Komponenten d), e) und/oder f) noch

g) 0,01 bis 15 Gew.-%, bevorzugt 0,01 bis 10 Gew.-%, besonders bevorzugt 0,01 bis 5 Gew.-% wenigstens eines Entformungsmittels, wobei die übrigen Komponenten soweit reduziert werden, dass die Summe aller Gewichtsprozente stets 100 ergibt.

In einer bevorzugten Ausführungsform enthalten die erfindungsgemäßen Zusammensetzungen zusätzlich zu a) bis g) oder anstelle der Komponenten d), e), f) und/oder g) noch

h) 0,01 bis 15 Gew.-%, bevorzugt 0,01 bis 10 Gew.-%, besonders bevorzugt 0,01 bis 5 Gew.-% weingstens eines sonstigen, von den Komponenten c) bis g) unterschiedlichen Additivs, wobei die übrigen Komponenten soweit reduziert werden, dass die Summe aller Gewichtsprozente stets 100 ergibt.

Erfindungsgemäß wird ein Blend aus Komponente a) PCT und Komponente b) PET eingesetzt. PCT (CAS No. 24936-69-4) kann beispielsweise von SK Chemicals unter dem Handelsnamen Puratan® bezogen werden. Bevorzugt einzusetzendes PCT weist eine intrinsische Viskosität im Bereich ca. 30 $cm^3/g$ bis 150 $cm^3/g$, besonders bevorzugt im Bereich von 40 $cm^3/g$ bis 130 $cm^3/g$, ganz besonders bevorzugt im Bereich von 60 $cm^3/g$ bis 120 $cm^3/g$, jeweils gemessen in Phenol/o-Dichlorbenzol (1:1 Gew.-Teile) bei 25°C. Die intrinsische Viskosität [η] wird auch Grenzviskositätszahl oder Staudinger Index genannt, da sie erstens eine Stoffkonstante ist und zweitens in einem Zusammenhang mit dem Molekulargewicht steht. Sie gibt an, wie die Viskosität des Lösungsmittel durch den gelösten Stoff beeinflusst wird. Zur Bestimmung der intrinsischen Viskosität wird die folgende Definition verwendet:

$$[\eta] = \lim_{c \to 0} \frac{\eta_{sp}}{c} = \lim_{c \to 0} \frac{1}{c} \ln\left(\frac{\eta}{\eta_0}\right)$$

wobei c die Konzentration des gelösten Stoffs in g/ml, _0 die Viskosität des reinen Lösungsmittel und $\eta_{sp} = \frac{\eta}{\eta_0} - 1$ die spezifische Viskosität ist.

Das als Komponente b) einzusetzende PET ist ein Reaktionsprodukt aus aromatischen Dicarbonsäuren oder ihren reaktionsfähigen Derivaten, bevorzugt Dimethylestern oder Anhydriden, und aliphatischen, cycloaliphatischen oder araliphatischen Diolen und Mischungen dieser Edukte. PET lässt sich aus Terephthalsäure (oder ihren reaktionsfähigen Derivaten) und den jeweiligen aliphatischen Diolen mit 2 bzw. 4 C-Atomen nach bekannten Methoden herstellen (Kunststoff-Handbuch, Bd. VIII, S. 695 FF, Karl-Hanser-Verlag, München 1973).

Bevorzugt als Komponente b) einzusetzendes PET enthält mindestens 80 Mol-%, vorzugsweise mindestens 90 Mol-%, bezogen auf die Dicarbonsäure, Terephthalsäurereste und mindestens 80 Mol-%, vorzugsweise mindestens 90 Mol-%, bezogen auf die Diolkomponente, Ethylenglykolreste.

Bevorzugt als Komponente b) einzusetzendes PET kann neben Terephthalsäureresten bis zu 20 Mol-% Reste anderer aromatische Dicarbonsäuren mit 8 bis 14 C-Atomen oder Reste aliphatischer Dicarbonsäuren mit 4 bis 12 C-Atomen enthalten, bevorzugt Reste von Phthalsäure, Isophthalsäure, Naphthalin-2,6-dicarbonsäure, 4,4'-Diphenyldicarbonsäure, Bernsteinsäure, Adipinsäure, Sebacinsäure, Azelainsäure, Cyclohexandiessigsäure, oder Cyclohexandicarbonsäure.

Bevorzugt als Komponente b) einzusetzendes PET kann neben Ethylen- bzw. Butandiol-1,4-glykolresten bis zu 20 Mol-% anderer aliphatischer Diole mit 3 bis 12 C-Atomen oder cycloaliphatischer Diole mit 6 bis 21 C-Atomen enthalten. Bevorzugt sind Reste von Propandiol-1,3, 2-Ethylpropandiol-1,3, Neopentylglykol, Pentan-diol-1,5, Hexandiol-1.6, 3-Methylpentandiol-2,4, 2-Methylpentandiol-2,4, 2,2,4-Trimethylpentandiol-1,3 oder-1,6,2-Ethylhexandiol-1,3, 2,2-Diethylpropandiol-1,3, Hexandiol-2,5, 1,4-Di-(ß-hydroxyethoxy)-benzol, 2,2-Bis-(4-hydroxycyclohexyl)-propan, 2,4-Dihydroxy-1,1,3,3-tetramethyl-cyclobutan, 2,2-Bis-(3-ß-hydroxyethoxyphenyl)-propan oder 2,2-Bis-(4-hydroxypropoxyphenyl)-propan (DE-A 24 07 674 (= US 4 035 958), DE-A 24 07 776, DE-A 27 15 932 (=US 4 176 224)).

In einer Ausführungsfom kann das erfindungsgemäß als Komponente b) einzusetzende PET durch Einbau relativ kleiner Mengen 3- oder 4-wertiger Alkohole oder 3- oder 4-basischer Carbonsäuren, wie sie z.B. in der DE-A 19 00 270 (= US-A 3 692 744) beschrieben sind, verzweigt werden. Bevorzugte Verzweigungsmittel sind Trimesinsäure, Trimellitsäure, Trimethylolethan und Trimethylolpropan und Pentaerythrit.

Das erfindungsgemäß einzusetzende PET besitzt bevorzugt eine intrinsische Viskosität im Bereich von ca. 0,3 $cm^3/g$ bis 1,5 $cm^3/g$, besonders bevorzugt im Bereich von 0,4 $cm^3/g$ bis 1,3 $cm^3/g$, insbesondere bevorzugt im Bereich von 0,5 $cm^3/g$ bis 1,0 $cm^3/g$ jeweils gemessen in Phenol/o-Dichlorbenzol (1:1 Gew.-Teile) bei 25°C mittels eines Ubbelohde Viskosimeters.

Die Polyester der Komponente a) PCT und der Komponente b) PET können gegebenenfalls auch im Gemisch mit anderen Polyestern und/oder weiteren Polymeren eingesetzt werden.

Das als Komponente c) einzusetzende Titandioxid hat bevorzugt eine mittlere Teilchengröße im Bereich von 90 nm bis 2000 nm. Für das erfindungsgemäß als Komponente c) einzusetzende Titandioxid kommen Titandioxid-Pigmente in Frage, deren Grundkörper nach dem Sulfat (SP)- oder Chlorid (CP)-Verfahren hergestellt sein können und die Anatas und / oder Rutilstruktur, bevorzugt Rutilstruktur haben. Der Grundkörper muss nicht stabilisiert sein, jedoch ist eine spezielle Stabilisierung bevorzugt: beim CP-Grundkörper durch eine Al- Dotierung von 0,3-3,0 Gew.-% (gerechnet als $Al_2O_3$) und einen Sauerstoffüberschuss in der Gasphase bei der Oxidation des Titantetrachlorids zu Titandioxid von mindestens 2 % ; beim SP-Grundkörper durch eine Dotierung bevorzugt mit Al, Sb, Nb oder Zn. Besonders bevorzugt, um eine hinreichend hohe Helligkeit der aus den Zusammensetzungen herzustellenden Erzeugnisse zu erhalten, ist eine "leichte" Stabilisierung mit Al, bzw. bei höheren Al-Dotierungsmengen eine Kompensation mit Antimon. Bei der Verwendung von Titandioxid als Weißpigment in Farben und Lacken, Kunststoffen usw. ist bekannt, dass durch UV-Absorption erzeugte unerwünschte photokatalytische Reaktionen zur Zersetzung des pigmentierten Materials führen. Dabei absorbieren Titandioxid-Pigmente im nahen ultravioletten Bereich Licht, so dass Elektron-Loch-Paare entstehen, welche hochreaktive Radikale auf der Titandioxid-Oberfläche erzeugen. Die gebildeten Radikale haben in organischen Medien einen Bindemittelabbau zur Folge. Erfindungsgemäß bevorzugt wird zur Erniedrigung der Fotoaktivität des Titandioxids dieses anorganisch nachbehandelt, besonders bevorzugt mit Oxiden von Si und / oder Al und / oder Zr und / oder durch den Einsatz von Sn-Verbindungen.

Bevorzugt ist die Oberfläche von pigmentärem Titandioxid mit amorphen Ausfällungen von Oxidhydraten der Verbindungen $SiO_2$ und / oder $Al_2O_3$ und / oder Zirkonoxid bedeckt. Die $Al_2O_3$-Hülle erleichtert die Pigmentdispergierung in der Polymermartrix, die $SiO_2$-Hülle erschwert den Ladungsaustausch an der Pigmentoberfläche und verhindert dadurch den Polymerabbau.

Erfindungsgemäß wird das Titandioxid bevorzugt mit hydrophilen und/oder hydrophoben organischen Beschichtungen versehen, insbesondere mit Siloxanen oder Polyalkoholen.

Erfindungsgemäß als Komponente c) einzusetzendes Titandioxid weist bevorzugt eine mittlere Teilchengröße im Bereich von 90 nm und 2000 nm, bevorzugt im Bereich von 200 nm und 800 nm auf.

Kommerziell erhältliche Produkte sind beispielsweise Kronos® 2230, Kronos® 2225 und Kronos® vlp7000 der Fa. Kronos, Dallas, USA.

Die erfindungsgemäß als Komponente d) einzusetzenden Glasfasern haben bevorzugt einen Faserdurchmesser im Bereich von 7 und 18 µm, besonders bevorzugt im Bereich von 9 und 15 µm, und werden als Endlosfasern oder als geschnittene oder gemahlene Glasfasern zugesetzt. Die Fasern werden bevorzugt mit einem geeigneten Schlichtesystem und einem Haftvermittler bzw. Haftvermittlersystem, besonders bevorzugt auf Silanbasis, ausgerüstet.

Ganz besonders bevorzugte Haftvermittler auf Silanbasis für die Vorbehandlung sind Silanverbindungen der allgemeinen Formel (I)

$$(X\text{-}(CH_2)_q)k\text{-}Si\text{-}(O\text{-}CrH_2r+1)_4\text{-}k \qquad \text{(I)}$$

in der die Substituenten folgende Bedeutung haben:

X: $NH_2$-, HO-,

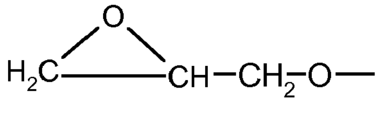

q: eine ganze Zahl von 2 bis 10, bevorzugt 3 bis 4,

r: eine ganze Zahl von 1 bis 5, bevorzugt 1 bis 2,

k: eine ganze Zahl von 1 bis 3, bevorzugt 1.

Insbesondere bevorzugte Haftvermittler sind Silanverbindungen aus der Gruppe Aminopropyltrimethoxysilan, Aminobutyltrimethoxysilan, Aminopropyltriethoxysilan, Aminobutyltriethoxysilan sowie die entsprechenden Silane, welche als Substituent X eine Glycidylgruppe enthalten.

Für die Ausrüstung der Glasfasern werden die Silanverbindungen bevorzugt in Mengen im Bereich von 0,05 bis 2 Gew.-%, besonders bevorzugt im Bereich von 0,25 bis 1,5 Gew.-% und insbesondere im Bereich von 0,5 bis 1 Gew.-% bezogen auf die Glasfasern zur Oberflächenbeschichtung eingesetzt.

Die Glasfasern können bedingt durch die Verarbeitung zur Formmasse bzw. dem daraus herzustellenden Erzeugnis in der Formmasse bzw. im Erzeugnis einen kleineren d97-bzw. d50-Wert aufweisen, als die ursprünglich eingesetzten Glasfasern. Die Glasfasern können bedingt durch die Verarbeitung zur Formmasse bzw. Formkörper in der Formmasse bzw. im Formkörper kürzere Längenverteilungen als ursprünglich eingesetzt aufweisen.

Erfindungsgemäß wird als Komponente e) Talkum eingesetzt, bevorzugt mikrokristallines Talkum. Talkum, auch als Talk bezeichnet, ist ein Schichtsilikat mit der chemischen Zusammensetzung $Mg_3[Si_4O_{10}(OH)_2]$, das je nach Modifikation als Talk-1A im triklinen oder als Talk-2M im monoklinen Kristallsystem kristallisiert (http://de.wikipedia.org/wiki/Talkum). Erfindungsgemäß einzusetzendes Talkum kann beispielsweise als Mistron® R10 von Imerys Talc Group, Toulouse, Frankreich (Rio Tinto Group) bezogen werden.

Erfindungsgemäß wird als Komponente f) wenigstens ein Phosphitstabilisator eingesetzt. Bevorzugt wird wenigstens ein Phosphitstabilisator der Reihe Tris(2,4-ditert-butylphenyl)phosphit (Irgafos® 168, BASF SE, CAS 31570-04-4), Bis(2,4-di-tert-butylphenyl)pentaerythritol-diphosphit (Ultranox® 626, Chemtura, CAS 26741-53-7), Bis(2,6-di-ter-butyl-4-methylphenyl)pentaerythritol-diphosphit (ADK Stab PEP-36, Adeka, CAS 80693-00-1), Bis(2,4-dicumylphenyl)pentaerythritol-diphosphit (Doverphos® S-9228, Dover Chemical Corporation, CAS 154862-43-8), Tris(nonylphenyl)phosphit (Irgafos® TNPP, BASF SE, CAS 26523-78-4), (2,4,6-tri-t-butylphenol)2-butyl-2-ethyl-1,3-propanediol-phosphit (Ultranox® 641, Chemtura, CAS 161717-32-4) oder Hostanox® P-EPQ eingesetzt.

Insbesondere bevorzugt wird als Phosphitstabilisator wenigstens Hostanox® P-EPQ (CAS No. 119345-01-6) der Clariant International Ltd., Muttenz, Schweiz eingesetzt. Dieses enthält das erfindungsgemäß insbesondere ganz besonders bevorzugt als Komponente d) einzusetzende Tetrakis(2,4-di-tert-butylphenyl)-1,1-biphenyl-4,4'-diylbisphosphonit (CAS No. 38613-77-3).

Erfindungsgemäß wird als Komponente g) wenigstens ein Entformungsmittel eingesetzt. Als bevorzugte Entformungsmittel wird wenigstens eines ausgewählt aus der Reihe Esterwachs(e), Pentaeritrytoltetrastearat (PETS), langkettige Fettsäuren, Salz(e) der langkettigen Fettsäuren, Amidderivat(e) der langkettigen Fettsäuren, Montanwachse sowie niedermolekulare Polyethylen- bzw. Polypropylenwachs(e) oder Ethylen Homopolymer Wachs(e).

Bevorzugte langkettige Fettsäuren sind Stearinsäure oder Behensäure. Bevorzugte Salze langkettiger Fettsäuren sind Calciumstearat oder Zinkstearat. Bevorzugtes Amidderivat langkettiger Fettsäuren ist Ethylen-bis-stearylamid. Bevorzugte Montanwachse sind Mischungen aus geradkettigen, gesättigten Carbonsäuren mit Kettenlängen von 28 bis 32 C-Atomen.

Insbesondere bevorzugt wird als Entformungsmittel ein Ethylen Homopolymer Wachs eingesetzt, das als Luwax® A von der BASF SE, Ludwigshafen, Deutschland vertrieben wird (Smp. 101 - 109°C).

Erfindungsgemäß kann als Komponente h) wenigstens ein Additiv eingesetzt werden, das sich von den Komponenten c), d), e), f) und g) unterscheidet.

Additive der Komponente h) sind bevorzugt Stabilisatoren, insbesondere UV-Stabilisatoren, Thermostabilisatoren, Gammastrahlenstabilisatoren, Antistatika, Fließhilfsmittel, Flammschutzmittel, Elastomermodifikatoren, Brandschutzadditive, Emulgatoren, Nukleierungsmittel, Weichmacher, Gleitmittel, Farbstoffe oder Pigmente. Die genannten und weitere geeignete Additive sind zum Beispiel beschrieben in Gächter, Müller, Kunststoff-Additive, 3. Ausgabe, Hanser-Verlag, München, Wien, 1989 und im Plastics Additives Handbook, 5th Edition, Hanser-Verlag, München, 2001. Die Additive können alleine oder in Mischung bzw. in Form von Masterbatchen eingesetzt werden.

Als Stabilisatoren werden bevorzugt sterisch gehinderte Phenole, Hydrochinone, aromatische sekundäre Amine wie Diphenylamine, substituierte Resorcine, Salicylate, Benzotriazole und Benzophenone, sowie verschieden substituierte Vertreter dieser Gruppen oder deren Mischungen eingesetzt.

Als Farbstoffe oder Pigmente werden unabhängig von dem Titandioxid der Komponente c) weitere Farbstoffe bzw. Pigmente eingesetzt, um im Falle eines optoelektronischen Erzeugnisses dem von diesem auszusendenden Licht einen Farbton zu geben oder um das zu emittierende Licht mittels eines optischen Aufhellers zu verbessern.

Als Nukleierungsmittel werden bevorzugt Natrium- oder Calciumphenylphosphinat, Aluminiumoxid oder Siliziumdioxid eingesetzt.

Als Weichmacher werden bevorzugt Phthalsäuredioctylester, Phthalsäuredibenzylester, Phthalsäurebutylbenzylester, Kohlenwasserstofföle oder N-(n-Butyl)benzolsulfonamid eingesetzt.

Als Elastomermodifikator einzusetzendes Additiv wird bevorzugt eines oder mehrere Pfropfpolymerisat(e) E von

E.1 5 bis 95 Gew.-%, vorzugsweise 30 bis 90 Gew.-%, wenigstens eines Vinylmonomeren auf

E.2 95 bis 5 Gew.-%, vorzugsweise 70 bis 10 Gew.-% einer oder mehrerer Pfropfgrundlagen mit Glasübergangstemperaturen < 10°C, vorzugsweise < 0°C, besonders bevorzugt < -20°C eingesetzt.

Die Pfropfgrundlage E.2 hat im Allgemeinen eine mittlere Teilchengröße ($d_{50}$-Wert) von 0,05 bis 10 $\mu$m, vorzugsweise 0,1 bis 5 $\mu$m, besonders bevorzugt 0,2 bis 1 $\mu$m.

Monomere E.1 sind vorzugsweise Gemische aus

E.1.1 50 bis 99 Gew.-% Vinylaromaten und/oder kernsubstituierten Vinylaromaten (wie beispielsweise Styrol, $\alpha$-Methylstyrol, p-Methylstyrol, p-Chlorstyrol) und/oder Methacrylsäure-($C_1$-$C_8$)-Alkylester (wie z.B. Methylmethacrylat, Ethylmethacrylat) und

E.1.2 1 bis 50 Gew.-% Vinylcyanide (ungesättigte Nitrile wie Acrylnitril und Methacrylnitril) und/oder (Meth)Acrylsäure-($C_1$-$C_8$)-Alkylester (wie z.B. Methylmethacrylat, n-Butylacrylat, t-Butylacrylat) und/oder Derivate (wie Anhydride und Imide) ungesättigter Carbonsäuren (beispielsweise Maleinsäureanhydrid und N-Phenyl-Maleinimid).

Bevorzugte Monomere E.1.1 sind ausgewählt aus mindestens einem der Monomere Styrol, $\alpha$-Methylstyrol und Methylmethacrylat, bevorzugte Monomere E.1.2 sind ausgewählt aus mindestens einem der Monomere Acrylnitril, Maleinsäureanhydrid und Methylmethacrylat.

Besonders bevorzugte Monomere sind E.1.1 Styrol und E.1.2 Acrylnitril.

Für die in den Elastomermodifikatoren einzusetzenden Pfropfpolymerisate geeignete Pfropfgrundlagen E.2 sind beispielsweise Dienkautschuke, EP(D)M-Kautschuke, also solche auf Basis Ethylen/Propylen und gegebenenfalls Dien, Acrylat-, Polyurethan-, Silikon-, Chloropren und Ethylen/Vinylacetat-Kautschuke.

Bevorzugte Pfropfgrundlagen E.2 sind Dienkautschuke (z.B. auf Basis Butadien, Isopren etc.) oder Gemische von Dienkautschuken oder Copolymerisate von Dienkautschuken oder deren Gemischen mit weiteren copolymerisierbaren Monomeren (z.B. gemäß E.1.1 und E.1.2), mit der Maßgabe, dass die Glasübergangstemperatur der Komponente E.2 unterhalb <10°C, vorzugsweise <0°C, besonders bevorzugt <-10°C liegt.

Besonders bevorzugt ist als Pfropfgrundlage E.2. reiner Polybutadienkautschuk.

Besonders bevorzugte Polymerisate E sind ABS-Polymerisate (Emulsions-, Masse- und Suspensions-ABS), wie sie z. B. in der DE-A 2 035 390 (=US-A 3 644 574) oder in der DE-A 2 248 242 (=GB-A 1 409 275) bzw. in Ullmann, Enzyklopädie der Technischen Chemie, Bd. 19 (1980), S. 280 ff. beschrieben sind. Der Gelanteil der Pfropfgrundlage E.2 beträgt mindestens 30 Gew.-%, vorzugsweise mindestens 40 Gew.-% (in Toluol gemessen). ABS bedeutet Acrylnitril-Butadien-Styrol-Copolymerisat mit der CAS-Nummer 9003-56-9 und ist ein synthetisches Terpolymer aus den drei unterschiedlichen Monomerarten Acrylnitril, 1,3-Butadien und Styrol. Es gehört zu den amorphen Thermoplasten. Die Mengenverhältnisse können dabei variieren von 15-35 % Acrylnitril, 5-30 % Butadien und 40-60 % Styrol.

Die Elastomermodifikatoren bzw. Pfropfcopolymerisate E werden durch radikalische Polymerisation, z.B. durch Emulsions-, Suspensions-, Lösungs- oder Massepolymerisation, vorzugsweise durch Emulsions- oder Massepolymerisation hergestellt.

Besonders geeignete Pfropfkautschuke sind auch ABS-Polymerisate, die durch Redox-Initiierung mit einem Initiatorsystem aus organischem Hydroperoxid und Ascorbinsäure gemäß US-A 4 937 285 hergestellt werden.

Da bei der Pfropfreaktion die Pfropfmonomeren bekanntlich nicht unbedingt vollständig auf die Pfropfgrundlage aufgepfropft werden, werden erfindungsgemäß unter Pfropfpolymerisaten E auch solche Produkte verstanden, die durch (Co)Polymerisation der Pfropfmonomere in Gegenwart der Pfropfgrundlage gewonnen werden und bei der Aufarbeitung mit anfallen.

Geeignete Acrylatkautschuke basieren auf Propfgrundlagen E.2 die vorzugsweise Polymerisate aus Acrylsäurealkylestern, gegebenenfalls mit bis zu 40 Gew.-%, bezogen auf E.2 anderen polymerisierbaren, ethylenisch ungesättigten Monomeren sind. Zu den bevorzugten polymerisierbaren Acrylsäureestern gehören $C_1$-$C_8$-Alkylester, bevorzugt Methyl-, Ethyl-, Butyl-, n-Octyl- und 2-Ethylhexylester; Halogenalkylester, vorzugsweise Halogen-$C_1$-$C_8$-alkyl-ester, insbesondere bevorzugt Chlorethylacrylat sowie Mischungen dieser Monomeren.

Zur Vernetzung können Monomere mit mehr als einer polymerisierbaren Doppelbindung copolymerisiert werden. Bevorzugte Beispiele für vernetzende Monomere sind Ester ungesättigter Monocarbonsäuren mit 3 bis 8 C-Atomen und ungesättigter einwertiger Alkohole mit 3 bis 12 C-Atomen, oder gesättigter Polyole mit 2 bis 4 OH-Gruppen und 2 bis 20 C-Atomen, wie z.B. Ethylenglykoldimethacrylat, Allylmethacrylat; mehrfach ungesättigte heterocyclische Verbindungen, wie z.B. Trivinyl- und Triallylcyanurat; polyfunktionelle Vinylverbindungen, wie Di- und Trivinylbenzole; aber auch Triallylphosphat und Diallylphthalat.

Bevorzugte vernetzende Monomere sind Allylmethacrylat, Ethylenglykoldimethacrylat, Diallylphthalat und heterocyclische Verbindungen, die mindestens 3 ethylenisch ungesättigte Gruppen aufweisen.

Besonders bevorzugte vernetzende Monomere sind die cyclischen Monomere Triallylcyanurat, Triallylisocyanurat, Triacryloylhexahydro-s-triazin, Triallylbenzole. Die Menge der vernetzten Monomere beträgt vorzugsweise 0,02 bis 5, insbesondere 0,05 bis 2 Gew.-%, bezogen auf die Pfropfgrundlage E.2.

Bei cyclischen vernetzenden Monomeren mit mindestens 3 ethylenisch ungesättigten Gruppen ist es vorteilhaft, die Menge auf unter 1 Gew.-% der Pfropfgrundlage E.2 zu beschränken.

Bevorzugte "andere" polymerisierbare, ethylenisch ungesättigte Monomere, die neben den Acrylsäureestern gegebenenfalls zur Herstellung der Pfropfgrundlage E.2 dienen können, sind beispielsweise Acrylnitril, Styrol, $\alpha$-Methylstyrol, Acrylamide, Vinyl-$C_1$-$C_6$-alkylether, Methylmethacrylat, Butadien. Bevorzugte Acrylatkautschuke als Pfropfgrundlage E.2 sind Emulsionspolymerisate, die einen Gelgehalt von mindestens 60 Gew.-% aufweisen.

Weitere geeignete Pfropfgrundlagen gemäß E.2 sind Silikonkautschuke mit pfropfaktiven Stellen, wie sie in den DE-A 3 704 657 (= US 4 859 740), DE-A 3 704 655 (= US 4 861 831), DE-A 3 631 540 (= US 4 806 593) und DE-A 3 631 539 (= US 4 812 515) beschrieben werden.

Als Flammschutzmittel einzusetzende Additive werden handelsübliche organische Halogenverbindungen mit oder ohne Synergisten oder handelsübliche halogenfreie Flammschutzmittel auf Basis von organischen oder anorgansichen Phosphorverbindungen unterschiedlich von Komponente f) oder organische Stickstoffverbindungen, einzeln oder im Gemisch, eingesetzt.

Als halogenhaltige, insbesondere bromierte und chlorierte Verbindungen seien bevorzugt Ethylen-1,2-bistetrabromphthalimid, Decabromdiphenylethan, Tetrabrombisphenol-A-epoxyoligomer, Tetrabrombisphenol-A-oligocarbonat, Tetrachlorbisphenol-A-oligocar-bonat, Polypentabrombenzylacrylat, bromiertes Polystyrol und bromierte Polyphenylenether genannt. Als Phosphorverbindungen sind die Phosphorverbindungen gemäß WO-A 98/17720 (= US 6 538 024) geeignet, bevorzugt Metallphosphinate, insbesondere Aluminiumphosphinat und Zinkphosphinat, Metallphosphonate, insbesondere Aluminiumphosphonat, Calciumphosphonat und Zinkphosphonat sowie die entsprechenden Hydrate der Metallphosphonate, außerdem Derivate der 9,10-Dihydro-9-oxa-10-phosphaphenanthren-10-oxide (DOPO-Derivate)], Triphenylphosphat (TPP), Resorcinol-bis-(diphenylphosphat) (RDP), einschließlich Oligomere sowie Bisphenol-A-bis-diphenylphosphat (BDP) einschließlich Oligomere, Polyphosphonate wie (z.B. Nofia HM1100 der Fa. FRX Polymers, Chelmsford, USA) ferner Zink-bis(diethylphosphinat), Aluminium-tris(diethylphosphinat), Melaminphosphat, Melaminpyrophosphat, Melaminpolyphosphat, Melamin-poly(aluminiumphosphat), Melamin-poly(zinkphosphat) und Phenoxyphosphazenoligomere und deren Mischungen. Als Stickstoffverbindungen kommen insbesondere Melamin und Melamincyanurat und Reaktionsprodukte aus Trichlortriazin, Piperazin und Morpholin gemäß CAS-Nr. 1078142-02-5 (z.B. MCA PPM Triazin HF der Fa. MCA Technologies GmbH, Biel-Benken, Schweiz) in Frage. Als Synergisten sind bevorzugt Antimonverbindungen, insbesondere Antimontrioxid und Antimonpentoxid, Zinkverbindungen, Zinnverbindungen, insbesondere Zinkstannat und Borate, insbesondere Zinkborate geeignet.

Auch können dem Flammschutzmittel sogenannte Kohlenstoffbildner, insbesondere Polyphenylenether und Antidrippingmittel wie Tetrafluorethylenpolymerisate zugesetzt werden

Von den halogenhaltigen Flammschutzmitteln werden besonders bevorzugt Ethylen-1,2-bistetrabromphthalimid, Tetrabrombisphenol-A-oligocarbonat, Polypentabrom-benzyl-acrylat oder bromiertes Polystyrol, insbesondere Firemaster® PBS64 (Fa. Great Lakes, West Lafayette, USA) jeweils in Kombination mit Antimontrioxid und/oder Aluminium-tris(dietylphosphinat) eingesetzt,

Unter den halogenfreien Flammschutzmitteln werden besonders bevorzugt Aluminium-tris(diethylphosphinat) in Kombination mit Melaminpolyphosphat (z.B. Melapur® 200/70 der Fa. BASF SE, Ludwigshafen, Deutschland) und/oder Melamincyanurat (z.B. Melapur® MC25 der Fa. BASF SE, Ludwigshafen, Deutschland) und/oder Phenoxyphosphazenoligomere (z.B. Rabitle® FP110 der Fa. Fushimi Pharmaceutical Co.m Ltd, Kagawa, Japan) eingesetzt.

Insbesondere ganz besonders bevorzugt kann Aluminium-tris(diethylphosphinat) (z.B. Exolit® OP1240 der Fa. Clariant International Ltd. Muttenz, Schweiz) (CAS Nr. 225789-38-8) auch als alleiniges Flammschutzmittel eingesetzt werden.

Unabhängig von der Komponente d) können als Additive zusätzliche Füll- und/oder Verstärkungsstoffe in den erfindungsgemäßen Zusammensetzungen enthalten sein.

Bevorzugt wird aber auch eine Mischung aus zwei oder mehr unterschiedlichen Füllstoffen und/oder Verstärkungsstoffen, insbesondere auf Basis von Talk, Glimmer, Silikat, Quarz, Titandioxid, Wollastonit, Kaolin, amorphe Kieselsäuren, Magnesiumcarbonat, Kreide, Feldspat, Bariumsulfat, Glaskugeln und/oder faserförmige Füllstoffe und/oder Verstärkungsstoffen auf der Basis von Kohlenstofffasern eingesetzt. Bevorzugt werden mineralische teilchenförmige Füllstoffe auf der Basis von Glimmer, Silikat, Quarz, Wollastonit, Kaolin, amorphe Kieselsäuren, Magnesiumcarbonat, Kreide, Feldspat oder Bariumsulfat eingesetzt. Besonders bevorzugt werden erfindungsgemäß mineralische teilchenförmige Füllstoffe auf der Basis von Wollastonit oder Kaolin eingesetzt.

Besonders bevorzugt werden ferner auch nadelförmige mineralische Füllstoffe als Additiv eingesetzt. Unter nadelförmigen mineralischen Füllstoffen wird erfindungsgemäß ein mineralischer Füllstoff mit stark ausgeprägtem nadelförmigen Charakter verstanden. Als Beispiel seien nadelförmige Wollastonite genannt. Bevorzugt weist das Mineral ein Länge : Durchmesser - Verhältnis von 2:1 bis 35:1, besonders bevorzugt von 3:1 bis 19:1, am meisten bevorzugt von 4:1 bis 12:1 auf. Die mittlere Teilchengröße der erfindungsgemäßen nadelförmigen Mineralien liegt bevorzugt bei kleiner 20 μm, besonders bevorzugt bei kleiner 15 μm, insbesondere bevorzugt bei kleiner 10 μm bestimmt mit einem CILAS GRANULOMETER.

Wie bereits oben bei der Komponente d) beschrieben, kann in einer bevorzugten Ausführungsform auch der als Additiv einzusetzende Füllstoff und/oder Verstärkungsstoff oberflächenmodifiziert sein, besonders bevorzugt mit einem Haftvermittler bzw. Haftvermittlersystem, insbesondere bevorzugt auf Silanbasis. Die Vorbehandlung ist jedoch nicht unbedingt erforderlich.

Für die Oberflächenmodifizierung der als Additiv einzusetzenden Füllstoffe werden die Silanverbindungen im Allgemeinen in Mengen von 0,05 bis 2 Gew.-%, vorzugsweise 0,25 bis 1,5 Gew.-% und insbesondere 0,5 bis 1 Gew.-% bezogen auf den mineralischen Füllstoff zur Oberflächenbeschichtung eingesetzt.

Die teilchenförmigen Füllstoffe können bedingt durch die Verarbeitung zur Formmasse bzw. Formkörper in der Formmasse bzw. im Formkörper einen kleineren d97- bzw. d50-Wert aufweisen, als die ursprünglich eingesetzten Füllstoffe.

In einer bevorzugten Ausführungsform betrifft die vorliegende Erfindung Zusammensetzungen enthaltend PCT, PET, Titandioxid, Glasfasern und Talkum.

In einer bevorzugten Ausführungsform betrifft die vorliegende Erfindung Zusammensetzungen enthaltend PCT, PET, Titandioxid, Glasfasern, Talkum und Tetrakis(2,4-di-tert-butylphenyl)-1,1-biphenyl-4,4'-diylbisphosphonit.

In einer bevorzugten Ausführungsform betrifft die vorliegende Erfindung Zusammensetzungen enthaltend PCT, PET, Titandioxid, Glasfasern, Talkum, Tetrakis(2,4-di-tert-butylphenyl)-1,1-biphenyl-4,4'-diylbisphosphonit und wenigstens ein Entformungsmittel ausgewählt aus der Reihe Esterwachse, Pentaeritrytoltetrastearat (PETS), langkettige Fettsäuren, insbesondere Stearinsäure oder Behensäure, deren Salze, insbesondere Ca- oder Zn-Stearat, sowie Amidderivate, insbesondere Ethylen-bis-stearylamid, oder Montanwachse, insbesondere Mischungen aus geradkettigen, gesättigten Carbonsäuren mit Kettenlängen von 28 bis 32 C-Atomen, sowie niedermolekulare Polyethylen- bzw. Polypropylenwachse oder Ethylen Homopolymer Wachse eingesetzt. In einer bevorzugten Ausführungsform betrifft die vorliegende Erfindung Zusammensetzungen enthaltend PCT, PET, Titandioxid, Glasfasern, Talkum, Tetrakis(2,4-di-tert-butylphenyl)-1,1-biphenyl-4,4'-diylbisphosphonit und Ethylen Homopolymer Wachs.

Die vorliegende Erfindung betrifft aber auch die Verwendung der erfindungsgemäßen Zusammensetzungen in Form von Formmassen zur Herstellung kurzzeitwärmeformbeständiger Erzeugnisse, bevorzugt elektronischer und elektronischer Baugruppen und Komponenten, insbesondere bevorzugt optoelektronischer Erzeugnisse.

Zur Herstellung erfindungsgemäß für den Spritzguss oder für die Extrusion einzusetzende Formmassen erhält man indem man die einzelnen Komponenten der erfindungsgemäßen Zusammensetzungen vermischt, zu einem Strang austrägt, bis zur Granulierfähigkeit abkühlt und granuliert.

Bevorzugt erfolgt das Vermischen bei Temperaturen im Bereich von 285 bis 310°C in der Schmelze. Insbesondere bevorzugt wird hierzu ein Zweiwellenextruder eingesetzt.

In einer bevorzugten Ausführungsform wird das Granulat, das die erfindungsgemäße Zusammensetzung enthält, bei 120°C im Vakuumtrockenschrank für ca. 2h getrocknet, bevor es dem Spritzguss oder einem Extrusionsverfahren zwecks Herstellung von Erzeugnissen unterzogen wird.

Die vorliegende Erfindung betrifft aber auch ein Verfahren zur Herstellung von Erzeugnissen, bevorzugt kurzzeitwärmeformbeständiger Erzeugnisse für die Elektro- oder Elektronikindustrie, besonders bevorzugt elektronischer oder elektrischer Baugruppen und Komponenten, wobei das Matrixmaterial als Formmasse enthaltend die erfindungsgemäßen Zusammensetzungen durch Spritzguss oder Extrusion, bevorzugt durch Spritzguss erhalten wird.

Die vorliegende Erfindung betrifft aber auch ein Verfahren zur Verbesserung der Kurzzeitwärmeformbeständigkeit Polyester-basierter Erzeugnisse, dadurch gekennzeichnet, dass man erfindungsgemäße Zusammensetzungen in Form von Formmassen durch Spritzguss oder Extrusion verarbeitet.

Die Verfahren des Spritzgusses sowie der Extrusion thermoplastischer Formmassen sind dem Fachmann bekannt.

Erfindungsgemäße Verfahren zur Herstellung von Erzeugnissen durch Extrusion oder Spritzguss arbeiten bei Schmelzetemperaturen im Bereich von 230 bis 330°C, bevorzugt von 250 bis 300°C sowie gegebenenfalls zusätzlich bei Drücken von maximal 2500 bar, bevorzugt bei Drücken von maximal 2000 bar, besonders bevorzugt bei Drücken von maximal 1500 bar und ganz besonders bevorzugt bei Drücken von maximal 750 bar.

Bei der sequentiellen Coextrusion werden zwei unterschiedliche Materialien in alternierender Folge hintereinander ausgestoßen. Auf diese Weise entsteht ein Vorformling mit in Extrusionsrichtung abschnittsweise unterschiedlicher Materialzusammensetzung. Es können bestimmte Artikelabschnitte durch entsprechende Materialauswahl mit spezifisch erforderlichen Eigenschaften ausgestattet werden, beispielsweise für Artikel mit weichen Enden und hartem Mittelteil oder integrierten weichen Faltenbalg-Bereichen (Thielen, Hartwig, Gust, "Blasformen von Kunststoffhohlkörpern", Carl Hanser Verlag, München 2006, Seite 127-129).

Das Verfahren des Spritzgusses zeichnet sich dadurch aus, dass der Rohstoff, bevorzugt in Granulatform, in einem beheizten zylindrischen Hohlraum aufgeschmolzen (plastifiziert) und als Spritzmasse unter Druck in einen temperierten Hohlraum gespritzt wird. Nach dem Abkühlen (Erstarren) der Masse wird das Spritzgussteil entformt.

Man unterscheidet

1. Plastifizieren / Aufschmelzen
2. Einspritzphase (Füllvorgang)
3. Nachdruckphase (wegen thermischer Kontraktion bei der Kristallisation)
4. Entformen.

Eine Spritzgießmaschine besteht aus einer Schließeinheit, der Spritzeinheit, dem Antrieb und der Steuerung. Zur Schließeinheit gehören feste und bewegliche Aufspannplatten für das Werkzeug, eine Stirnplatte sowie Säulen und Antrieb der beweglichen Werkzeugaufspannplatte. (Kniehebelgelenk oder hydraulische Schließeinheit).

Eine Spritzeinheit umfasst den elektrisch beheizbaren Zylinder, den Antrieb der Schnecke (Motor, Getriebe) und die Hydraulik zum Verschieben der Schnecke und Spritzeinheit. Die Aufgabe der Spritzeinheit besteht darin, das Pulver bzw. das Granulat aufzuschmelzen, zu dosieren, einzuspritzen und nachzudrücken (wegen Kontraktion). Das Problem des Rückflusses der Schmelze innerhalb der Schnecke (Leckströmung) wird durch Rückstromsperren gelöst.

Im Spritzgießwerkzeug wird dann die einströmende Schmelze gelöst, gekühlt und somit das zu fertigende Erzeugnis gefertigt. Notwendig dazu sind immer zwei Werkzeughälften. Beim Spritzguss unterscheidet man folgende Funktionskomplexe:

- Angusssystem
- Formbildende Einsätze
- Entlüftung
- Maschinen- und Kraftaufnahme
- Entformungssystem und Bewegungsübertragung
- Temperierung

Im Gegensatz zum Spritzguss wird bei der Extrusion ein endlos geformter Kunststoffstrang, hier ein Polyamid, im Extruder eingesetzt, wobei der Extruder eine Maschine zur Herstellung thermoplastischer Formstücke ist. Man unterscheidet

Einschneckenextruder und Doppelschneckenextruder sowie die jeweiligen Untergruppen konventioneller Einschneckenextruder, förderwirksamer Einschneckenextruder, gegenläufiger Doppelschneckenextruder und gleichläufiger Doppelschneckenextruder.

Extrusionsanlagen bestehen aus Extruder, Werkzeug, Nachfolgeeinrichtung, Extrusionsblasformen. Extrusionsanlagen zum Herstellen von Profilen bestehen aus: Extruder, Profil-Werkzeug, Kalibrierung, Kühlstrecke, Raupen- und Rollenabzug, Trennvorrichtung und Kipprinne.

Die vorliegende Erfindung betrifft folglich auch Erzeugnisse, insbesondere Kurzzeitformbeständige Erzeugnisse, erhältlich durch Extrusion, Profil-Extrusion oder Spritzguss der erfindungsgemäßen Zusammensetzungen.

Die vorliegende Erfindung betrifft aber auch ein Verfahren zur Herstellung kurzzeitwärmeformbeständiger Erzeugnisse, dadurch gekennzeichnet, dass PCT und PET sowie Titandioxid enthaltende Zusammensetzungen im Spritzguss oder mittels Extrusion verarbeitet werden.

Die vorliegende Erfindung betrifft bevorzugt ein Verfahren zur Herstellung kurzzeitwärmeformbeständiger Erzeugnisse, dadurch gekennzeichnet, dass Zusammensetzungen enthaltend die erfindungsgemäßen Zusammensetzungen, bevorzugt

a) 3 bis 30 Gew.-%, bevorzugt 5 bis 25 Gew.-%, besonders bevorzugt 10 bis 20 Gew.-% Poly(1,4-cyclohexylendimethylen)terephthalat (PCT), wobei der Anteil an PCT bezogen auf die Summe aller enthaltener thermoplastischen Polymere in der Zusammensetzung im Bereich von 5 bis 40 Gew-%, bevorzugt 7 bis 30 Gew-%, besonders bevorzugt bei 10-25% Gew.-% liegt,

b) 15 bis 90 Gew.-%, bevorzugt 20 bis 70 Gew.-%, besonders bevorzugt 30 bis 60 Gew.-% Polyethylenterephthalat (PET) und

c) 5 bis 70 Gew.-%, bevorzugt 10 bis 40 Gew.-%, besonders bevorzugt 15 bis 35 Gew.-% Titandioxid, wobei die Summe aller Gewichtsprozente stets 100 ergibt, in Form thermoplastischer Formmassen im Spritzguss oder in der Extrusion verarbeitet werden.

Die durch die genannten Verfahren erhältlichen Erzeugnisse zeigen überraschenderweise eine hervorragende Kurzzeitwärmebeständigkeit, insbesondere in Lötprozessen sowie optimierte Eigenschaften in der Reflektion nach thermischer Beanspruchung, in den mechanischen Eigenschaften und zeichnen sich darüber hinaus durch eine gegenüber dem Stand der Technik niedrigere Verarbeitungstemperatur aus.

Die vorliegende Erfindung betrifft aber auch die Verwendung der erfindungsgemäßen Zusammensetzungen zur Steigerung der Kurzzeitwärmeformbeständigkeit von Erzeugnissen, insbesondere von optoelektronischen Erzeugnissen.

Die auf erfindungsgemäße Weise hergestellten Erzeugnisse eignen sich deshalb hervorragend für elektrische oder elektronische Erzeugnisse, bevorzugt optoelektronische Erzeugnisse, insbesondere LEDs oder OLEDs. Eine Leuchtdiode (auch Lumineszenz-Diode, englisch light-emitting diode, deutsch lichtemittierende Diode, LED) ist ein elektronisches Halbleiter-Bauelement. Fließt durch die Diode Strom in Durchlassrichtung, so strahlt sie Licht, Infrarotstrahlung (als Infrarotleuchtdiode) oder auch Ultraviolettstrahlung mit einer vom Halbleitermaterial und der Dotierung abhängigen Wellenlänge ab. Eine organische Leuchtdiode (englisch organic light emitting diode, OLED) ist ein dünnfilmiges leuchtendes Bauelement aus organischen halbleitenden Materialien, das sich von den anorganischen Leuchtdioden (LED) dadurch unterscheidet, dass Stromdichte und Leuchtdichte geringer sind und keine einkristallinen Materialien erforderlich sind. Im Vergleich zu herkömmlichen (anorganischen) Leuchtdioden lassen sich organische Leuchtdioden daher kostengünstiger herstellen, ihre Lebensdauer ist jedoch derzeit geringer als die herkömmlicher Leuchtdioden.

## Beispiele

Zur Herstellung der erfindungemäß beschriebenen Zusammensetzungen wurden die einzelnen Komponenten in einem Zweiwellenextruder (ZSK 26 Mega Compounder der Fa. Coperion Werner & Pfleiderer (Stuttgart, Deutschland) bei Temperaturen im Bereich von 285 bis 310°C in der Schmelze vermischt, als Strang ausgetragen, bis zur Granulierfähigkeit abgekühlt und granuliert. Vor weiteren Schritten wurde das Granulat bei 120°C im Vakuumtrockenschrank für ca. 2h getrocknet.

Die Platten und Prüfkörper für die in der Tabelle 1 aufgeführten Untersuchungen wurden auf einer handelsüblichen Spritzgießmaschine bei einer Massetemperatur von 285-295 °C und einer Werkzeugtemperatur von 80-120°C verspritzt.

### Kurzzeitwärmeformbeständigkeit

Der Test zur Bestimmung der Kurzzeitwärmeformbeständigkeit bzw. Lötbadbeständigkeit simuliert die Bedingungen des Wellenlötens wie folgt:

Aus einer Platte der mit einer Dicke von 1,0 mm wurden Prüfkörper der Abmaße 20 x 10 x 1 mm ausgeschnitten. Diese wurden für 15 min in einen mit der in Tabelle 1 angegebenen Temperatur beheizten handelsüblichen Heißluftofen verbracht. Anschließend wurde das Anschmelzverhalten der Probekörper visuell begutachtet. "+" steht dabei für eine Probe ohne visuell beobachtbares Anschmelzen, "o" für eine Probe mit abgerundeten Kanten und "-" für eine über die gesamte Oberfläche angeschmolzene Probe.

### Reflexion

Als Wert für die Reflexion wurde der Glanzwert bei 440 und 450nm, gemäß DIN 5033-4 auf einem Farbmessgerät der Firma Minolta (CM2600D) unter D65-Licht an Prüfkörpern der Dimensionen 60 mm x 40 mm x 4 mm bestimmt.

### Reflexionsverlust nach Heißluftalterung

Für die Heißluftalterung wurden die Prüfkörper der Dimensionen 60 mm x 40 mm x 4 mm für 28 Tage bei 140°C

in einem handelsüblichen Heißluftofen gelagert. Nach der Lagerung wurden die Prüfkörper dem Ofen entnommen und nach Abkühlen auf Raumtemperatur wurde die Reflexion wie oben beschrieben gemessen und mit dem entsprechenden Reflexions-Wert vor der Lagerung prozentual ins Verhältnis gesetzt.

**Biegemodul und Biegefestigkeit**

Biegemodul (Einheit Pa) und Biegefestigkeit der aus den erfindungsgemäßen thermoplastischen Formmassen hergestellten Erzeugnisse wurden im Zugversuch nach ISO 178-A bei 23 °C bestimmt. Eine alternative Möglichkeit der Bestimmung bietet EN ISO 527 (http://de.wikipedia.org/wiki/EN_ISO_527-1).

**Schlagzähigeit**

Die Schlagzähigkeit der aus den erfindungsgemäßen thermoplastischen Formmassen hergestellten Erzeugnisse wurden im Zugversuch nach ISO 180-1 U bei 23°C bestimmt (Einheit $kJ/m^2$).

**Edukte**

PCT: Poly(1,4-cyclohexandimethanolterephthalat) mit einer intrinsischen Viskosität von 110 $g/cm^3$

PET: Polyethylenterephthalat (Polyester Chips PET V004, Fa. Invista, Wichita,USA)

GF: Mit silanhaltigen Verbindungen beschlichtete Glasfaser mit einem Durchmesser von 10 μm (CS 7967, Handelsprodukt der Lanxess N.V., Antwerpen, Belgien)

Titandioxid: für die Verwendung in Polyestern gebräuchliches anorganisches Titandioxid (z.B. Kronos® 2230 der Fa. Kronos, Dallas, USA)

Talkum: Mistron® R10 der Imerys Talc Group, Toulouse, Frankreich (Rio Tinto Group)

Phosphitstabilisator: Hostanox® P-EPQ (CAS No. 119345-01-6) der Clariant International Ltd., Muttenz, Schweiz , mit der Tetrakis(2,4-di-tert-butylphenyl)-1,1-biphenyl-4,4'-diylbisphosphonit (CAS No. 38613-77-3).

Entformungsmittel: Luwax® A von der BASF SE, Ludwigshafen, Deutschland.

Aus der Tabelle 1 wird ersichtlich, dass die erfindungsgemäßen Zusammensetzungen (Beispiele 1 bis 3) im Vergleich zu Polymerzusammensetzungen basierend auf PCT als einziger Polymerkomponente (Vergleich 1) deutlich bessere Reflexionswerte nach Heißluftlagerung und bessere mechanische Eigenschaften bei gleich guter Kurzzeitwärmeformbeständigkeit bis 285°C aufweisen. Im Vergleich zu Polymerzusammensetzungen basierend auf PET als einziger Polymerkomponente zeigen die erfindungsgemäßen Zusammensetzungen (Beispiele 1 bis 3) deutlich bessere Reflexionswerte nach Heißluftlagerung und bessere Kurzzeitwärmeformbeständigkeiten bei 275 und 285°C bei gleich guten mechanischen Eigenschaften.

**Tabelle 1**

| **Rezepturen** | **Vgl. 1** | **Vgl. 2** | **Bsp. 1** | **Bsp. 2** | **Bsp. 3** |
|---|---|---|---|---|---|
| PCT | 52,95 | 0 | 5 | 10 | 15 |
| PET | 0 | 52,95 | 47,95 | 42,95 | 37,95 |
| Talkum | 1 | 1 | 1 | 1 | 1 |
| Titandioxid | 20 | 20 | 20 | 20 | 20 |
| GF | 25 | 25 | 25 | 25 | 25 |
| Phosphitstabilisator | 0,75 | 0,75 | 0,75 | 0,75 | 0,75 |
| Entformungsmittel | 0,3 | 0,3 | 0,3 | 0,3 | 0,3 |

(fortgesetzt)

| Messergebnisse | | | | | |
|---|---|---|---|---|---|
| Löten bei 265°C | + | + | + | + | + |
| Löten bei 275°C | + | ○ | + | + | + |
| Löten bei 285°C | + | - | + | + | + |
| Verbleibende Reflexion in [%] nach 28 Tagen Lagerung bei 140°C | 94 | 94 | 97 | 98 | 97 |
| IZOD Schlagzähigkeit | 15 | 25 | 25 | 26 | 24 |
| Biegemodul | 9750 | 10626 | 10643 | 10271 | 10445 |

Mengenangaben der Komponenten in Tabelle 1 jeweils in Gew.-%.

## Patentansprüche

**1.** Zusammensetzungen enthaltend

a) 3 bis 30 Gew.-% Poly(1,4-cyclohexylendimethylen)terephthalat (PCT), wobei der Anteil an PCT bezogen auf die Summe aller enthaltener thermoplastischen Polymere in der Zusammensetzung im Bereich von 5 bis 40 Gew-% liegt,
b) 15 bis 90 Gew.-% Polyethylenterephthalat (PET) und
c) 5 bis 70 Gew.-% Titandioxid, wobei die Summe aller Gewichtsprozente stets 100 ergibt.

**2.** Zusammensetzungen gemäß Anspruch 1, **dadurch gekennzeichnet, dass** diese zusätzlich zu den Komponenten a), b) und c) noch d) 5 bis 50 Gew.-% Glasfasern enthalten, wobei die Komponenten a), b), c) soweit reduziert werden, dass die Summe aller Gewichtsprozente stets 100 ergibt.

**3.** Zusammensetzungen gemäß der Ansprüche 1 oder 2, **dadurch gekennzeichnet, dass** diese zusätzlich zu a) bis d) oder anstelle von d) noch e) 0,01 bis 15 Gew.-% Talkum enthalten, wobei die übrigen Komponenten soweit reduziert werden, dass die Summe aller Gewichtsprozent stets 100 ergibt.

**4.** Zusammensetzungen gemäß einem der Ansprüche 1 bis 3, **dadurch gekennzeichnet, dass** diese zusätzlich zu a) bis e) oder anstelle der Komponenten d) und/oder e) noch f) 0,01 bis 1 Gew.-% wenigstens eines Phosphitstabilisators enthalten, wobei die übrigen Komponenten soweit reduziert werden, dass die Summe aller Gewichtsprozente stets 100 ergibt.

**5.** Zusammensetzungen gemäß Anspruch 4, **dadurch gekennzeichnet, dass** als Phosphitstabilisator wenigstens einer ausgewählt aus der Reihe bestehnd aus Tris(2,4-ditert-butylphenyl)phosphit, Bis(2,4-di-tert-butylphenyl)pentaerythritol-diphosphit, Bis(2,6-di-ter-butyl-4-methylphenyl)pentaerythritol-diphosphite, Bis(2,4-dicumylphenyl)pentaerythritol diphosphit, Tris(nonylphenyl)phosphit, (2,4,6-tri-t-butylphenol)-2-butyl-2-ethyl-1,3-propanediol-phosphit, und Tetrakis(2,4-di-tert-butylphenyl)-1,1-biphenyl-4,4'-diylbisphosphonit eingesetzt wird.

**6.** Zusammensetzungen gemäß Anspruch 5, **dadurch gekennzeichnet dass** als Phosphitstabilisator wenigstens Tetrakis(2,4-di-tert-butylphenyl)-1,1-biphenyl-4,4'-diylbisphosphonit eingesetzt wird.

**7.** Zusammensetzungen gemäß einem der Ansprüche 1 bis 6, **dadurch gekennzeichnet, dass** diese zusätzlich zu a) bis f) oder anstelle der Komponenten d), e) und/oder f) noch g) 0,01 bis 15 Gew.-% wenigstens eines Entformungsmittels enthalten, wobei die übrigen Komponenten soweit reduziert werden, dass die Summe aller Gewichtsprozente stets 100 ergibt.

**8.** Zusammensetzungen gemäß Anspruch 7, **dadurch gekennzeichnet, dass** als Entformungsmittel wenigstens eines der Reihe Esterwachs(e), Pentaeritrytoltetrastearat (PETS), langkettige Fettsäuren, Salz(e) der langkettigen Fettsäuren, Amidderivat(e) der langkettigen Fettsäuren, Montanwachse sowie niedermolekulare Polyethylen- bzw. Polypropylenwachs(e) oder Ethylen Homopolymer Wachs(e) eingesetzt wird/werden.

9. Zusammensetzungen gemäß Anspruch 8, **dadurch gekennzeichnet, dass** als langkettige Fettsäuren Stearinsäure oder Behensäure, als Salze langkettiger Fettsäuren Calciumstearat oder Zinkstearat, als Amidderivat langkettiger Fettsäuren Ethylen-bis-stearylamid und als Montanwachse Mischungen aus geradkettigen, gesättigten Carbonsäuren mit Kettenlängen von 28 bis 32 C-Atomen eingesetzt werden.

10. Erzeugnisse erhältlich durch Extrusion oder Spritzguss von Formmassen enthaltend die Zusammensetzungen gemäß einem der Ansprüche 1 bis 9.

11. Erzeugnisse gemäß Anspruch 10, **dadurch gekennzeichnet, dass** es sich um Kurzzeitwärmeformbeständige Erzeugnisse für die Elektro- oder Elektronikindustrie handelt.

12. Verwendung der Zusammensetzungen gemäß einem der Ansprüche 1 bis 9, zur Herstellung von Erzeugnissen für die Elektro- oder Elektronikindustrie.

13. Verwendung gemäß Anspruch 12, **dadurch gekennzeichnet, dass** der Einsatz der Zusammensetzungen zur Steigerung der Kurzzeitwärmeformbeständigkeit der Erzeugnisse dient.

14. Verwendung gemäß der Ansprüche 12 oder 13, **dadurch gekennzeichnet, dass** es sich bei den Erzeugnissen um optoelektronische Erzeugnisse handelt.

15. Verfahren zur Herstellung kurzzeitwärmeformbeständiger Erzeugnisse, **dadurch gekennzeichnet, dass** Zusammensetzungen gemäß einem der Ansprüche 1 bis 9 in Form thermoplastischer Formmassen im Spritzguss oder in der Extrusion verarbeitet werden.

Europäisches Patentamt
European Patent Office
Office européen des brevets

# EUROPÄISCHER RECHERCHENBERICHT

Nummer der Anmeldung
EP 13 19 4637

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A,D | EP 2 465 896 A1 (LANXESS DEUTSCHLAND GMBH [DE]) 20. Juni 2012 (2012-06-20)<br>* Beispiele 1-6 *<br>----- | 1-15 | INV.<br>C08L67/02<br>C08K3/22 |
| A | US 4 874 809 A (KEEP GERALD T [US]) 17. Oktober 1989 (1989-10-17)<br>* das ganze Dokument *<br>----- | 1-15 | ADD.<br>C08K9/06 |

RECHERCHIERTE SACHGEBIETE (IPC)
C08K
C08L

Der vorliegende Recherchenbericht wurde für alle Patentansprüche erstellt

1

| Recherchenort | Abschlußdatum der Recherche | Prüfer |
|---|---|---|
| Den Haag | 3. April 2014 | Scheunemann, Sven |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR. EP 13 19 4637

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

03-04-2014

| Im Recherchenbericht angeführtes Patentdokument | Datum der Veröffentlichung | Mitglied(er) der Patentfamilie | Datum der Veröffentlichung |
|---|---|---|---|
| EP 2465896 A1 | 20-06-2012 | CN 103347946 A | 09-10-2013 |
| | | EP 2465896 A1 | 20-06-2012 |
| | | EP 2652023 A1 | 23-10-2013 |
| | | JP 2014500368 A | 09-01-2014 |
| | | KR 20130113498 A | 15-10-2013 |
| | | US 2014088241 A1 | 27-03-2014 |
| | | WO 2012080361 A1 | 21-06-2012 |
| US 4874809 A | 17-10-1989 | KEINE | |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 2010049531 A1
- JP 55027335 A
- WO 2012080361 A1
- WO 2007033129 A2
- DE 2407674 A
- US 4035958 A
- DE 2407776 A
- DE 2715932 A
- US 4176224 A
- DE 1900270 A
- US 3692744 A
- DE 2035390 A
- US 3644574 A
- DE 2248242 A
- GB 1409275 A
- US 4937285 A
- DE 3704657 A
- US 4859740 A
- DE 3704655 A
- US 4861831 A
- DE 3631540 A
- US 4806593 A
- DE 3631539 A
- US 4812515 A
- WO 9817720 A
- US 6538024 B


### In der Beschreibung aufgeführte Nicht-Patentliteratur


- **ULLMANN.** Enzyklopädie der Technischen Chemie. 1980, vol. 19, 280 ff
- **THIELEN ; HARTWIG ; GUST.** Blasformen von Kunststoffhohlkörpern. Carl Hanser Verlag, 2006, 127-129